# EUROPÄISCHE PATENTSCHRIFT

(11) **EP 1 874 605 B1**
(45) Veröffentlichungstag und Bekanntmachung des Hinweises auf die Patenterteilung: **23.10.2013**
(21) Anmeldenummer: 06724579.5
(22) Anmeldetag: 26.04.2006
(51) Int. Cl.: B60W 50/08, B60W 50/14

(54) **FAHRERASSISTENZSYSTEM ZUR AUSGABE ZUMINDEST EINER INFORMATION**
DRIVER ASSISTANCE SYSTEM FOR OUTPUTTING AT LEAST ONE PIECE OF INFORMATION
SYSTEME D'ASSISTANCE AU CONDUCTEUR CONCU POUR FOURNIR AU MOINS UNE INFORMATION

(30) Priorität: 28.04.2005 DE 102005019705
(43) Veröffentlichungstag der Anmeldung: 09.01.2008
(73) Patentinhaber: Bayerische Motoren Werke Aktiengesellschaft, 80809 München (DE)
(72) Erfinder: STURM, Christoph, 85540 Haar (DE)
(86) Internationale Anmeldenummer: PCT/EP2006/003854
(87) Internationale Veröffentlichungsnummer: WO 2006/114292

(56) Entgegenhaltungen:
- EP-A- 1 424 261
- EP-A- 1 630 756
- WO-A-2004/068439
- DE-A1- 10 149 285
- DE-A1- 10 343 178
- DE-A1- 10 344 299

## Beschreibung

Die Erfindung bezieht sich auf ein Fahrerassistenzsystem zur von bestimmten Bedingungen abhängigen Ausgabe zumindest einer Information, insbesondere einer Warnung, an den Fahrer eines Kraftfahrzeugs. Solche Systeme sind allgemein bekannt.

Moderne Kraftfahrzeuge verfügen über eine Vielzahl von Fahrerassistenzsystemen, durch welche verschiedene Funktionen zur Fahrerassistenz umgesetzt werden. Einige dieser Funktionen bestehen darin, dass unter bestimmten Bedingungen Information, insbesondere eine Warnung, an den Fahrer des Kraftfahrzeugs ausgegeben wird. Eine solche Information kann beispielsweise auf optischem und/oder akustischem und/oder haptischem Wege ausgegeben werden.

Insbesondere bei Systemen zur Warnung des Fahrers in sicherheitskritischen Situationen treten die Bedingungen für die Ausgabe einer solchen Information im Normalbetrieb des Kraftfahrzeugs in der Regel verhältnismäßig selten auf und/oder sie lassen sich nicht gezielt durch den Bediener des Kraftfahrzeugs hervorrufen.

Die EP-A-1630756 betrifft einen Stand der Technik nach Artikel 54(3) EPÜ und offenbart ein Fahrerassistenzsystem zur von bestimmten Bedingungen abhängigen Ausgabe zumindest einer Information, insbesondere einer Warnung, an den Fahrer eines Kraftfahrzeugs, wobei das Fahrerassistenzsystem in einen Demonstrationsmodus versetzbar ist, in welchem gegenüber dem Normalbetrieb veränderte Bedingungen für die Ausgabe der Information gelten. Hierbei werden Warnungen nach einer Aufforderung durch den Fahrer ausgegeben. Das qualitative Verhalten des Fahrerassistenzsystems wird somit nicht demonstriert.

Der Fahrer eines Kraftfahrzeugs, welches mit einem solchen Fahrerassistenzsystem ausgerüstet ist, wird im Ernstfall, d. h. im Falle der Ausgabe einer Information, insbesondere einer Warnung, unter Umständen durch die Ausgabe der Information überrascht und ist nicht in der Lage, adäquat auf diese reagieren. Dies kann für den Fahrer verschiedene nachteilige Folgen haben. Zum einen kann eine unbekannte Warnung den Fahrer in unangenehmer Weise erschrecken oder verunsichern. Zum anderen kann die Reaktionszeit des Fahrers durch sein eingeschränktes Vermögen zur Interpretation einer unbekannten oder ungewohnten Information gegenüber dem Idealfall verlängert werden, wodurch eine sicherheitskritische Situation hervorgerufen oder intensiviert werden könnte. Im ungünstigsten Fall könnte der Fahrer eine ausgegebene Information fehlinterpretieren und durch eine unvorteilhafte Bedienaktion selbst eine sicherheitskritische Situation hervorrufen oder intensivieren.

Der Erfindung liegt die Aufgabe zugrunde, ein Fahrerassistenzsystem für ein Kraftfahrzeug zu schaffen, welches die korrekte Interpretation einer von dem Fahrerassistenzsystem an den Fahrer ausgegebenen Information durch den Fahrer fördert.

Die Aufgabe wird gelöst durch ein Fahrerassistenzsystem zur von bestimmten Bedingungen abhängigen Ausgabe zumindest einer Information, insbesondere einer Warnung, an den Fahrer, welches in einen Demonstrationsmodus, in welchem dem Fahrer das qualitative Verhalten des Fahrerassistenzsystems demonstriert wird, versetzbar ist, in welchem gegenüber dem Normalbetrieb veränderte Bedingungen für die Ausgabe der Information gelten.

Vorzugsweise werden die Bedingungen für die Ausgabe der Information in dem Demonstrationsmodus so gewählt, dass die Wahrscheinlichkeit für die Ausgabe der Information gegenüber dem Normalbetrieb erhöht wird.

Vorzugsweise werden in dem Demonstrationsmodus bestimmte Parameter der Signalverarbeitung durch das Fahrerassistenzsystem gegenüber dem Normalbetrieb variiert. Im einfachsten Fall kann beispielsweise eine Auslöseschwelle für die Ausgabe einer Warnmeldung herabgesetzt werden. Alternativ oder zusätzlich können zeitliche und/oder geometrische Parameter variiert und/oder zeitliche und/oder geometrische Skalierungsfaktoren eingeführt oder verändert werden.

Gemäß einer vorteilhaften Weiterbildung der Erfindung ist der Demonstrationsmodus durch einen Bediener, insbesondere den Fahrer, gezielt aktivierbar. Bevorzugt wird die Aktivierung in an sich bekannter Weise über einen Drucktaster oder ein multifunktionales Bedienelement oder ein System zur Sprach- oder Gestenerkennung ermöglicht.

Gemäß einer weiteren Weiterbildung der Erfindung sind alle oder ausgewählte Parameter der Signalverarbeitung durch einen Bediener kontinuierlich oder in diskreten Abstufungen variierbar. Auf diese Art und Weise sind faktisch mehrere Demonstrationsmodi bzw. verschiedene Abstufungen, beispielsweise Empfindlichkeitsstufen, eines solchen realisierbar.

Bevorzugt wird dem Fahrer der aktuelle Modus des Fahrerassistenzsystems, beispielsweise durch eine Leuchte in einem Instrumentenkombi oder eine Textmeldung oder eine Klangausgabe, angezeigt.

Bevorzugt geht das Fahrerassistenzsystem nach Ablauf einer bestimmten Zeitspanne ab der Aktivierung des Demonstrationsmodus oder nach Ablauf einer bestimmten Zeitspanne ab dem Zeitpunkt der Ausgabe der letzten innerhalb des Demonstrationsmodus ausgegebenen Information oder nach dem nächsten Fahrzeugstart selbsttätig wieder in den Normalbetrieb über. Statt einer Zeitspanne kann alternativ oder zusätzlich eine gefahrene Strecke ausgewertet werden. Durch einen solchen selbsttätigen Übergang kann verhindert werden, dass die vom Hersteller bewusst für den Normalbetrieb vorgesehene Parametrierung des Fahrerassistenzsystems dauerhaft durch den Fahrer verändert wird.

Bevorzugt wird der Demonstrationsmodus selbsttätig deaktiviert oder neu parametriert, wenn eine hohe zeitliche Dichte von an den Fahrer ausgegebenen Informationen auftritt oder zu erwarten ist. Dadurch kann beispielsweise eine Reizüberflutung des Fahrers und/oder ein aus subjektiver Sicht inkonsistentes Verhalten des Fahrerassistenzsystems unterbunden werden.

Bevorzugt geht das Fahrerassistenzsystem selbsttätig in den Normalbetrieb über, wenn Bedingungen auftreten oder zu erwarten sind, welche die Ausgabe einer Information auch im Normalbetrieb vorsehen. Dadurch wird sichergestellt, dass wesentliche Informationen nicht durch den Demonstrationsmodus überdeckt werden.

Denselben Zweck verfolgt die folgende Weiterbildung der Erfindung: Bevorzugt unterscheiden sich die im Demonstrationsmodus an den Fahrer ausgegebenen Informationen geringfügig, bei einer optischen Anzeige beispielsweise farblich, von den im Normalbetrieb an den Fahrer ausgegebenen Informationen. Die Abweichung ist in diesem Fall jedoch so gering zu gestalten, dass der Lerneffekt des Fahrers dadurch nicht beeinträchtigt wird. Bevorzugt ist eine Möglichkeit zur Information des Fahrers hinsichtlich der im Demonstrationsmodus bestehenden Abweichung gegenüber dem Normalbetrieb vorzusehen.

Gemäß einer weiteren Weiterbildung der Erfindung werden alle oder ausgewählte Parameter der Signalverarbeitung eines bereits in einem Demonstrationsmodus befindlichen erfindungsgemäßen Fahrerassistenzsystems erneut variiert, falls in einem bestimmten Zeitraum oder auf einer bestimmten Fahrstrecke zuvor trotz aktiviertem Demonstrationsmodus keine Information an den Fahrer ausgegeben wurde. Bevorzugt geht das Fahrerassistenzsystems hierzu selbsttätig von einer ersten diskreten Empfindlichkeitsstufe zu einer zweiten diskreten Empfindlichkeitsstufe mit höherer Empfindlichkeit über. Alternativ kann die Empfindlichkeit des Fahrerassistenzsystems kontinuierlich bis zum Auftreten der Ausgabe einer Information an den Fahrer gesteigert werden.

Auf diese Weise kann dem unterschiedlichen Fahrverhalten und der unterschiedlichen Experimentierfreude unterschiedlicher Fahrer Rechnung getragen werden. Ein risikobereiter Fahrer wird demnach unter Umständen bereits in der ersten Empfindlichkeitsstufe die Ausgabe einer Information erfahren, ein weniger risikobereiter Fahrer unter Umständen erst in einer höheren Empfindlichkeitsstufe.

Die Erfindung erlaubt es dem Fahrer eines Kraftfahrzeugs, sich mit dem grundlegenden, d. h. qualitativen, Verhalten des Fahrerassistenzsystems in einem Demonstrationsmodus vertraut zu machen. Die im Demonstrationsmodus gemachten Erfahrungen fördern das Vermögen des Fahrers, eine im Normalbetrieb von dem Fahrerassistenzsystem ausgegebene Information korrekt zu interpretieren und/oder adäquat auf diese zu reagieren.

Aus der DE 103 15 564 A1 ist ein Kraftfahrzeug mit wenigstens einer Gerätefunktion bekannt, die bei einer bestimmten Fahrgeschwindigkeit automatisch aktiviert wird, welches dadurch gekennzeichnet ist, dass die Funktion auch bei stehendem Fahrzeug in einem Demonstrationsmodus durch die Betätigung wenigstens zweier Bedienelemente aktivierbar ist. Die Lehre der DE 103 15 564 A1 ist auf die vorliegende Aufgabe jedoch nicht anwendbar, da gemäß der vorliegenden Erfindung keine gezielte Aktivierung der Ausgabe einer Information an den Fahrer gewünscht ist. Vielmehr werden gemäß der vorliegenden Erfindung lediglich die für die Aktivierung der Ausgabe erforderlichen Bedingungen in quantitativer Hinsicht variiert. Das qualitative Verhalten des Fahrerassistenzsystems, das unter anderem darin besteht, eine Information abhängig von bestimmten Bedingungen auszugeben, bleibt erhalten.

Ein weiterer Vorteil der Erfindung liegt darin, dass ein erfindungsgemäßer Demonstrationsmodus gezielt zur Produktinformation und/oder Verkaufsförderung einsetzbar ist. Die Funktionen moderner Fahrerassistenzsysteme stoßen insbesondere bei potenziellen Fahrzeugkäufern auf großes Interesse. Für einen Fahrzeughändler ist es daher vorteilhaft, dem Kunden eine solche Funktion im Ausstellungsraum, auf dem Firmengelände oder auf einer kurzen Probefahrt präsentieren zu können. Eine Funktion eines Fahrerassistenzsystems sollte hierzu mit hoher Wahrscheinlichkeit innerhalb eines kurzen Zeitraums auslösbar sein. Dies kann durch die Erfindung bewerkstelligt werden.

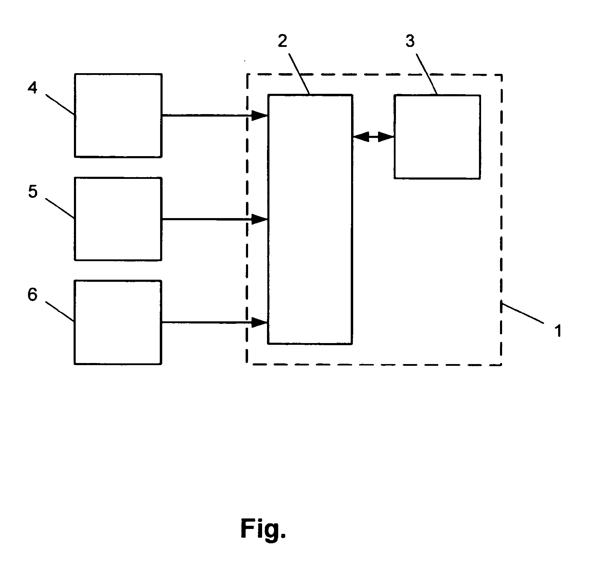

Anhand der einzigen beigefügten Zeichnungen wird die Erfindung weiter erläutert. Dabei zeigt die beigefügte Zeichnung schematisch ein Fahrerassistenzsystem 1 gemäß einer bevorzugten Ausführungsform der vorliegenden Erfindung.

Das Fahrerassistenzsystem 1 dient zur Ausgabe einer Kollisionswarnung, insbesondere einer Auffahrwarnung, an den Fahrer eines Kraftfahrzeugs, in welches das Fahrerassistenzsystem 1 eingebaut ist.

Das Fahrerassistenzsystem 1 weist eine Signalverarbeitungseinheit 2 und eine Ausgabeeinheit 3 zur Ausgabe von Informationen an den Fahrer auf. Die Signalverarbeitungseinheit 2 ist mit Eigensensoren 4 und Umgebungssensoren 5 des Kraftfahrzeugs verbunden.

Die Funktion des Fahrerassistenzsystems 1 wird im Folgenden stark vereinfacht dargestellt:

Die von den Eigensensoren 4 und Umgebungssensoren 5 aufgenommenen Signale gehen in ein in der Signalverarbeitungseinheit 2 vorliegendes Bewegungsmodell des Kraftfahrzeugs sowie in ebenfalls in der Signalverarbeitungseinheit 2 vorliegende Bewegungsmodelle für Objekte in der Umgebung des Kraftfahrzeugs ein.

Anhand der Bewegungsmodelle schätzt die Signalverarbeitungseinheit 2 das Risiko einer Kollision des Kraftfahrzeugs mit Objekten in seiner Umgebung ab. Gegebenenfalls stellt die Signalverarbeitungseinheit 2 zusätzlich Berechnungen zum Zeitpunkt und/oder zur Art und/oder zur Schwere einer solchen Kollision an.

Überschreitet das Risiko einer Kollision eine bestimmte Schwelle, so wird durch die Ausgabeeinheit 3 eine Kollisionswarnung an den Bediener ausgegeben.

Im Normalbetrieb wird die Kollisionswarnung nur dann ausgegeben, wenn innerhalb einer Zeitspanne bestimmter Länge vom aktuellen Zeitpunkt an, beispielsweise innerhalb von 2 Sekunden, mit einer bestimmten Wahrscheinlichkeit, beispielsweise 90 Prozent, eine Kollision eintritt.

Durch ein Bedienelement 6, welches ebenfalls mit der Signalverarbeitungseinheit 2 verbunden ist, kann das Fahrerassistenzsystem 1 durch den Fahrer in einen Demonstrationsmodus versetzt werden. Eine Leuchte im Sichtfeld des Fahrers zeigt dem Fahrer den aktiven Zustand des Demonstrationsmodus an.

In diesem Demonstrationsmodus findet die Signalaufnahme und Signalverarbeitung der Signalverarbeitungseinheit 2 im Wesentlichen in der gleichen Art und Weise statt wie im Normalbetrieb. Allerdings wird eine Kollisionswarnung immer dann ausgegeben, wenn innerhalb einer Zeitspanne von 2 Sekunden vom aktuellen Zeitpunkt an mit einer Wahrscheinlichkeit von 10 Prozent eine Kollision mit einem Objekt in der Umgebung des Fahrzeugs eintritt.

Im Demonstrationsmodus wird dementsprechend häufiger eine Kollisionswarnung an den Fahrer ausgegeben als im Normalbetrieb. Der Fahrer kann im Demonstrationsmodus auf einer kurzen Probefahrt mit hoher Wahrscheinlichkeit die Ausgabe einer Kollisionswarnung hervorrufen, ohne sich oder andere Verkehrsteilnehmer hierzu in eine sicherheitskritische Situation bringen zu müssen. Der Fahrer kann sich im Demonstrationsmodus somit an die Art des Informationsangebots gewöhnen, kann das qualitative Verhalten des Fahrerassistenzsystems kennenlernen und kann lernen, eine im Normalbetrieb ausgegebene Information zu interpretieren und adäquat auf diese zu reagieren.

Die oben beschriebene Variation der Wahrscheinlichkeitsschwelle stellt lediglich eine einfache Variante eines erfindungsgemäßen Übergangs vom Normalbetrieb in einen Demonstrationsmodus dar. Ebenso denkbar und im Bereich der Erfindung sind alternative oder zusätzliche Variationen anderer Parameter, beispielsweise eine Variation des betrachteten Zeithorizonts, eine Variation der Modellparameter der bei der Kollisionsabschätzung berücksichtigten Bewegungsmodelle und/oder eine Skalierung von Sensorsignalen der Eigensensoren 4 und Umgebungssensoren 5 bzw. daraus berechneter Größen.

In dem Fall, dass sich das Fahrerassistenzsystem 1 im Demonstrationsmodus befindet und auf einer bestimmten Fahrstrecke von beispielsweise zwei Kilometern ab Aktivierung des Demonstrationsmodus keine Kollisionswarnung an den Fahrer ausgegeben wurde, werden die Bedingungen für die Ausgabe einer Kollisionswarnung gemäß der hier beschriebenen bevorzugten Ausführungsform eines erfindungsgemäßen Fahrerassistenzsystems erneut angepasst. Eine Kollisionswarnung wird nach dieser Anpassung immer dann ausgegeben, wenn innerhalb einer Zeitspanne von 2 Sekunden vom aktuellen Zeitpunkt an mit einer Wahrscheinlichkeit von 5 Prozent eine Kollision mit einem Objekt in der Umgebung des Fahrzeugs eintritt. Dieser speziellen Ausgestaltung des Demonstrationsmodus liegt die Überlegung zugrunde, dass der Fahrer durch die Aktivierung des Demonstrationsmodus offensichtlich die Erfahrung der Ausgabe einer Information machen wollte, jedoch nicht bereit ist hierzu ein hohes Sicherheitsrisiko einzugehen. Das Fahrerassistenzsystem passt die eigene Empfindlichkeit daher nach einer bestimmten Fahrstrecke entsprechend an eine eventuelle geringe Risikobereitschaft des Fahrers an.

## Patentansprüche

1. Fahrerassistenzsystem zur von bestimmten Bedingungen abhängigen Ausgabe zumindest einer Information, insbesondere einer Warnung, an den Fahrer eines Kraftfahrzeugs, **dadurch gekennzeichnet,**
**dass** das Fahrerassistenzsystem
in einen Demonstrationsmodus, in welchem dem Fahrer das qualitative Verhalten des Fahrerassistenzsystems demonstriert wird, versetzbar ist, in welchem gegenüber dem Normalbetrieb veränderte Bedingungen für die Ausgabe der Information gelten.

2. Fahrerassistenzsystem nach Anspruch 1, **dadurch gekennzeichnet,**
**dass** die Bedingungen für die Ausgabe der Information in dem Demonstrationsmodus so gewählt sind, dass die Wahrscheinlichkeit für die Ausgabe der Information gegenüber dem Normalbetrieb erhöht wird.

3. Fahrerassistenzsystem nach einem der Ansprüche 1 oder 2,
**dadurch gekennzeichnet,**
**dass** in dem Demonstrationsmodus bestimmte Parameter der Signalverarbeitung durch das Fahrerassistenzsystem gegenüber dem Normalbetrieb des Fahrerassistenzsystems variiert sind.

4. Fahrerassistenzsystem nach einem der Ansprüche 1 bis 3,
**dadurch gekennzeichnet,**
**dass** der Demonstrationsmodus durch einen Bediener, insbesondere den Fahrer, gezielt aktivierbar ist.

5. Fahrerassistenzsystem nach einem der Ansprüche 1 bis 3,
**dadurch gekennzeichnet,**
**dass** alle oder ausgewählte Parameter der Signalverarbeitung durch einen Bediener kontinuierlich oder in diskreten Abstufungen variierbar sind.

## Claims

1. A driver assistance system for outputting, depending on certain conditions, at least one piece of information, more especially a warning, to the driver of a motor vehicle, **characterised in that** the driver assistance system can be transferred to a demonstration mode, in which the qualitative behaviour of the driver assistance system is demonstrated to the driver and in which changed conditions compared to normal operation are applied to the outputting of the information.

2. A driver assistance system according to claim 1, **characterised in that** the conditions for outputting information in the demonstration mode are selected such that the probability for the outputting of the information is increased compared to the normal operation.

3. A driver assistance system according to either of claims 1 or 2, **characterised in that** in the demonstration mode certain parameters of the signal processing are varied by the driver assistance system compared to normal operation of the driver assistance system.

4. A driver assistance system according to any one of claims 1 to 3, **characterised in that** the demonstration mode can be activated in a targeted manner by an operator, more especially the driver.

5. A driver assistance system according to any one of claims 1 to 3, **characterised in that** all the parameters or selected parameters of the signal processing can be varied continuously or in discrete graduations by an operator.

## Revendications

1. Système d'assistance à un conducteur permettant de délivrer au conducteur d'un véhicule automobile, en fonction de conditions déterminées au moins une information, en particulier un avertissement,
**caractérisé en ce que**
le système d'assistance à un conducteur peut être déplacé dans un mode de démonstration dans lequel est indiqué au conducteur le comportement qualitatifs de ce système, et dans lequel des conditions modifiées par rapport au fonctionnement normal permettent la délivrance de l'information.

2. Système d'assistance à un conducteur conforme à la revendication 1,
**caractérisé en ce que**
les conditions permettent la délivrance de l'information dans le mode de démonstration sont choisies de sorte que la probabilité de la délivrance de l'information soit augmentée par rapport au fonctionnement normal.

3. Système d'assistance à un conducteur conforme à l'une des revendications 1 et 2,
**caractérisé en ce que**
dans le mode de démonstration, des paramètres déterminés du traitement de signal sont modifiés par le système d'assistance au conducteur par rapport au fonctionnement normal de ce système.

4. Système d'assistance à un conducteur conforme à l'une des revendications 1 à 3,
**caractérisé en ce que**
le mode de démonstration peut être activé de façon sélective par un utilisateur, en particulier, par le conducteur.

5. Système d'assistance à un conducteur conforme à l'une, des revendications 1 à 3,
**caractérisé en ce que**
tous les paramètres ou des paramètres sélectionnés du traitement de signal peuvent être modifiés en continu ou graduellement par un utilisateur.
